# EUROPÄISCHE PATENTANMELDUNG

(11) **EP 4 678 575 A1**
(43) Veröffentlichungstag der Anmeldung: **14.01.2026**
(21) Anmeldenummer: 24020312.5
(22) Anmeldetag: 11.10.2024
(51) Int. Cl.: B65H 5/12, B65H 29/24, B65H 15/00

(54) **VORRICHTUNG, TRANSPORTEINHEIT UND VERFAHREN ZUM TRANSPORTIEREN VON BIEGESCHLAFFEN ELEMENTEN**

(30) Priorität: 10.07.2024 DE 102024002240
(71) Anmelder: Grob-Werke GmbH & Co. KG, 87719 Mindelheim (DE)
(72) Erfinder: Glück, Moritz, 82398 Polling (DE); Hierl, Patrick, 87742 Altensteig (DE); Vogl, Peter, 86825 Bad Wörishofen (DE); Hromada, Matthias, 87634 Obergünzburg (DE); Fritz, Alexander, 89297 Roggenburg (DE); Jaser, Fabian, 86862 Lamerdingen (DE); Martens, Knut, 87719 Mindelheim (DE); Herb, Johannes, 86807 Buchloe (DE)

(57) **Zusammenfassung**

Die vorliegende Erfindung betrifft eine Vorrichtung (1), eine Transporteinheit (43) sowie ein Verfahren (50) zum Transportieren von biegeschlaffen Elementen (48), insbesondere für die Herstellung einer Batterie- und/oder Brennstoffzelle. Die Vorrichtung (1) umfasst eine Transporteinrichtung (2) zum Transportieren eines biegeschlaffen Elements (48) von einem ersten Bereich (A) zu einem zweiten Bereich (B), eine Führungsplatte (3) zur Führung der Transporteinrichtung (2), eine Antriebseinheit (4) zum Bewegen der Transporteinrichtung (2), eine Hubeinrichtung (5) zur Kopplung der Antriebseinheit (4) und der Transporteinrichtung (2), und einen Montagerahmen (6), wobei die Führungsplatte (3) einen plattenartigen Hauptkörper (13), eine in sich geschlossene Führungskontur (14) und eine Durchgangsöffnung (15) aufweist; die Transporteinrichtung (2) mittels der Führungskontur (14) geführt ist; die Antriebseinheit (4) eine Antriebswelle (16) aufweist, die sich in der ersten Richtung (X) erstreckt, und axial fest in der Durchgangsöffnung (15) der Führungsplatte (4) aufgenommen ist; und die Hubeinrichtung (5) die Transporteinrichtung (2) und die Antriebseinheit (4) drehmomentübertragend miteinander koppelt und dazu eingerichtet ist, einen Abstand zwischen der Antriebswelle (16) und der Transporteinrichtung (2) in einer zweiten Richtung (Z) positionsabhängig anzupassen.

## Beschreibung

Die vorliegende Erfindung bezieht sich auf eine Vorrichtung, eine Transporteinheit sowie ein Verfahren zum Transportieren von biegeschlaffen Elementen, insbesondere für die Herstellung einer Batterie- und/oder einer Brennstoffzelle.

Für den Transport von biegeschlaffen Elementen sind im Stand der Technik verschiedene Vorrichtungen bekannt. So beschreibt bspw. die US 2024/136591 A1 eine Stapelmaschine für den Bereich der Batterieherstellung, die einen rollenden Transport von Schichten für die Batterieherstellung bereitstellt, um ein Scheuern, das sogenannte "Scrubbing", zu reduzieren. Hierfür weist die Stapelmaschine drei exzentrisch rotierende Greifer auf, die jeweils eine spezielle Sechskantform aufweisen, wovon jede zweite Fläche zum Transport der Schichten genutzt werden kann. Die Schichten werden über negativen Druck, z.B. Vakuum, an den Flächen gehalten und über positiven Druck abgelegt bzw. abgegeben.

Die US 2022/173427 A1 beschreibt eine Vorrichtung zur Herstellung von geschichteten Elektrodenkörpern. Die Vorrichtung umfasst eine Schneidtrommel für negative Elektroden, die eine einzelne negative Elektrodenplatte auf eine erste Breite schneidet, eine negative Elektrodenplatte erzeugt und diese transportiert; eine Heiztrommel für negative Elektroden, die die negative Elektrodenplatte erwärmt; eine Schneidtrommel für positive Elektroden, die eine einzelne positive Elektrodenplatte auf eine zweite Breite schneidet, eine positive Elektrodenplatte erzeugt und diese transportiert; eine Heiztrommel für positive Elektroden, die die positive Elektrodenplatte erwärmt; eine Bondingtrommel; eine Schneidtrommel für Separatoren, die einen Separator auf eine dritte Breite schneidet, eine einzelne zweite Separatorplatte und eine einzelne erste Separatorplatte eines geschichteten Körpers, der durch die Bondingtrommel zusammengefügt wird, schneidet; und eine Laminiertrommel, die die geschnittenen, geschichteten Körper auf eine Laminierstation schichtet.

Die US 11,575,144 B2 beschreibt ein Stapelsystem für Batteriematerialien, welches ermöglichen soll, schichtförmige Werkstücke mit Bezug zu Batteriematerialien kontinuierlich mit einer hohen Geschwindigkeit stapeln zu können. Das beschriebene System umfasst einen Transportmechanismus, der die schichtförmigen Werkstücke in einer vorbestimmten Richtung transportiert, einen Platzierungsmechanismus, der die Werkstücke platziert und einen Stapelmechanismus, der die Werkstücke stapelt. Der Platzierungsmechanismus umfasst einen Stator eines Linearmotors mit einer vorbestimmten Laufschiene, eine Vielzahl an Bewegungsvorrichtungen eines Linearmotors, die an dem Stator vorgesehen sind, Aufnehmelemente, die an den Bewegungsvorrichtungen vorgesehen sind und die Werkstücke aufnehmen, und einen Steuerungsteil, der das Laufen der Bewegungsvorrichtungen an dem Stator steuert. Die Aufnehmelemente nehmen die von dem Transportmechanismus geförderten Werkstücke auf und transportieren die Werkstücke rotativ zusammen mit den Bewegungsvorrichtungen, die entlang der Laufschiene des Stators laufen, und stapeln die Werkstücke dann auf dem Stapelmechanismus.

Die US 11,631,881 B2 beschreibt eine Stapelvorrichtung für Batteriematerialien, die schichtförmige, ein Batteriematerial betreffende Werkstücke sequenziell mit hoher Geschwindigkeit stapelt. Die Stapelvorrichtung weist einen Transportmechanismus zum Transportieren von Werkstücken in eine vorbestimmte Richtung, einen Rotor, der unterhalb des Transportmechanismus angeordnet ist, um eine vorbestimmte Rotationswelle zu rotieren, eine Mehrzahl an Halteabschnitten, die an einem Umfangsabschnitt des Rotors vorgesehen sind, um die Werkstücke zu halten, und einen Stapeltisch zum Stapeln der Werkstücke hierauf, auf. Die Mehrzahl an Halteabschnitten ist dazu eingerichtet, eine Oberfläche von jedem der Werkstücke zu halten, die transportiert werden, indem die andere Oberfläche von jedem der Werkstücke durch den Transportmechanismus gehalten wird, dann die Werkstücke in Übereinstimmung mit einer Rotation des Rotors zu transportieren, während die Werkstücke umgedreht werden, und die Werkstücke auf dem Stapeltisch mit der anderen Oberfläche dem Stapeltisch zugewandt zu stapeln.

Die DE 10 2022 105 399 A1 beschreibt eine Zellstapelanlage zum Stapeln von Segmenten von Energiezellen. Die Anlage weist eine Zuführeinrichtung, die die Segmente in einer Zuführgeschwindigkeit kontinuierlich zuführt, und wenigstens eine Zellstapelvorrichtung auf, welche die Segmente von der Zuführeinrichtung übernimmt und zu Stapeln aufeinanderstapelt. Dabei weist die Zellstapelvorrichtung wenigstens eine Entnahmevorrichtung und ein Ablageorgan auf, wobei die Entnahmevorrichtung zu einer sich wiederholenden abwechselnden Bewegung aus einer Beschleunigung und einer Verzögerung angetrieben wird, und die Entnahmevorrichtung die Segmente in der Zuführgeschwindigkeit von der Zuführeinrichtung übernimmt und in einer verzögerten Bewegung oder in einem Stillstand an das Ablageorgan übergibt.

Es hat sich nun herausgestellt, dass ein weiterer Bedarf besteht eine bekannte Vorrichtung zum Transportieren von biegeschlaffen Elementen zu verbessern. Insbesondere besteht ein weiterer Bedarf eine Vorrichtung zum Transportieren von biegeschlaffen Elementen bereitzustellen, die einen verbesserten, insbesondere schonenden, weiter insbesondere beschädigungsarmen Transport und/oder verbesserte, insbesondere kürzere Taktzeiten, weiter insbesondere zwischen einem Aufnehmen und einem Ablegen eines biegeschlaffen Elements, ermöglicht.

Vor diesem Hintergrund ist es eine Aufgabe der vorliegenden Erfindung eine verbesserte Vorrichtung zum Transportieren von biegeschlaffen Elementen bereitzustellen, die insbesondere einen schonenden, weiter insbesondere beschädigungsarmen Transport und/oder verbesserte, insbesondere kürzere Taktzeiten, weiter insbesondere zwischen einem Aufnehmen und einem Ablegen eines biegeschlaffen Elements, ermöglicht.

Diese und andere Aufgaben, die beim Lesen der nachfolgenden Beschreibung noch genannt werden oder vom Fachmann erkannt werden können, werden durch den Gegenstand der unabhängigen Ansprüche gelöst. Vorteilhafte Ausführungsformen und Weiterbildungen sind den Unteransprüchen und der nachfolgenden Beschreibung zu entnehmen.

Ein erster Aspekt der Erfindung bezieht sich auf eine Vorrichtung zum Transportieren von biegeschlaffen Elementen, insbesondere für die Herstellung von Batterie- und/oder Brennstoffzellen. Die Vorrichtung umfasst eine Transporteinrichtung zum Transportieren eines biegeschlaffen Elements von einem ersten Bereich zu einem zweiten Bereich, zumindest eine Führungsplatte zur Führung der Transporteinrichtung, eine Antriebseinheit zum Bewegen der Transporteinrichtung, und eine Hubeinrichtung zur Kopplung der Antriebseinheit und der Transporteinrichtung. Die zumindest eine Führungsplatte weist einen plattenartigen Hauptkörper, eine in sich geschlossene Führungskontur, die an dem plattenartigen Hauptkörper vorgesehen ist, und eine Durchgangsöffnung zum Anordnen der Antriebseinheit auf. Die Transporteinrichtung ist mittels der Führungskontur geführt. Die Antriebseinheit weist zumindest eine Antriebswelle auf, die sich in einer ersten Richtung erstreckt, und axial fest, aber drehbar in der Durchgangsöffnung der zumindest einen Führungsplatte angeordnet ist. Die Hubeinrichtung koppelt die Transporteinrichtung und die Antriebseinheit drehmomentübertragend miteinander und ist dazu eingerichtet, in einer zweiten Richtung, einen Abstand zwischen der Antriebswelle und der Transporteinrichtung, der von der Position der Transporteinrichtung relativ zur Führungsplatte abhängig ist, anzupassen.

Die Führungsplatte ist feststehend, z.B. in einem Montagerahmen der Vorrichtung montiert, und kann insbesondere als eine Kurvenscheibe ausgebildet sein. Insbesondere weist die Vorrichtung zumindest zwei Führungsplatten zur Führung der Transporteinrichtung auf, wobei jede Führungsplatte einen plattenartigen Hauptkörper, eine in sich geschlossene Führungskontur, die an dem jeweiligen plattenartigen Hauptkörper vorgesehen ist, und eine Durchgangsöffnung zum Anordnen der Antriebseinheit aufweist. Dabei sind die Führungsplatten in der ersten Richtung zueinander beabstandet und im Wesentlichen parallel, einander gegenüberliegend in dem Montagerahmen angeordnet.

Die Transporteinrichtung ist über die Hubeinrichtung drehfest, also drehmomentübertragend, mit der Antriebswelle gekoppelt, sodass die Transporteinrichtung bei Rotation der Antriebswelle entlang der Führungskontur(en) geführt wird. Dabei ist die Hubeinrichtung dazu eingerichtet, einen Abstand zwischen der Rotationsachse der Antriebswelle, die insbesondere im Wesentlichen mittig zur Führungsplatte, weiter insbesondere mittig zur Führungskontur, angeordnet ist, und der Führungskontur anzupassen. Insbesondere ist die Führungskontur nicht als Kreis ausgebildet, d.h., die Punkte, die auf der Führungskontur liegen, weisen nicht alle den gleichen Abstand zur Rotationsachse der Antriebswelle, und somit zum Mittelpunkt der Führungskontur, auf. Somit ist der Abstand zwischen der Rotationsachse der Antriebswelle und der Führungskontur in Abhängigkeit von der Position verschieden. Die Hubeinrichtung, die die Transporteinrichtung und die Antriebswelle koppelt, ist somit dazu eingerichtet, diesen, sich positionsabhängig verändernden Abstand auszugleichen, sodass die Transporteinrichtung bei Rotation der Antriebswelle jederzeit - unabhängig vom Abstand zwischen der Rotationsachse der Antriebswelle und der Führungskontur - mit der Führungskontur in Kontakt steht und somit die Bewegung der Transporteinrichtung entlang der Führungskontur geführt wird.

Die Führungskontur kann vertiefungsartig, z.B. als eine Nut oder als eine Rille, ausgebildet sein. Hierbei wird die Transporteinrichtung insbesondere an einer (radial äußeren) Innenkontur geführt. Alternativ ist es auch denkbar, dass die Führungskontur vorsprungartig, z.B. als eine Rippe, ausgebildet ist. Dabei wird die Transporteinrichtung insbesondere an einer Außenkontur geführt, wobei die Transporteinrichtung aktiv, z.B. mittels Vorspannelementen, wie bspw. Federelemente, gegen die Außenkontur vorgespannt werden muss.

Insbesondere über die Gestaltung der Führungskontur kann die Vorrichtung an eine vorgesehene Funktion, insbesondere optimal, angepasst werden. So kann ein Konturverlauf der Führungskontur abhängig davon sein, ob der erste und der zweite Bereich Abschnitte von kontinuierlichen und/oder diskreten Systemen darstellen. Mit anderen Worten kann man sagen, dass der Konturverlauf der Führungskontur unterschiedlich sein kann. Zum Beispiel kann sich der Konturverlauf der Führungskontur, wenn der erste Bereich und der zweite Bereich jeweils Abschnitte eines kontinuierlichen Systems sind, von einem Konturverlauf der Führungskontur, wenn der erste Bereich und der zweite Bereich jeweils Abschnitte eines diskreten Systems sind, und/oder von einem Konturverlauf, wenn der erste oder der zweite Bereich ein Abschnitt eines kontinuierlichen Systems ist und der jeweils andere Bereich ein Abschnitt eines diskreten Systems ist, unterscheiden. Darüber hinaus ist die Führungskontur abhängig von Geschwindigkeiten, mit denen die Antriebswelle und somit die Transporteinrichtung rotiert, und/oder von einem Abstand, insbesondere einem maximalen Abstand, zwischen der Antriebswelle und der Transporteinrichtung.

So weist die Führungskontur insbesondere eine nicht kreisförmige Geometrie bzw. Form auf. Weiter insbesondere weist die Führungskontur eine vorbestimmte Geometrie auf, die abhängig von mehreren Faktoren definiert ist. Diese Faktoren können zum Beispiel eine vorgegebene Zykluszeit, eine Formatgröße des biegeschlaffen Elements, eine sogenannte Synchronisationsstrecke, und/oder ein durch die Transporteinrichtung auf die Antriebswelle wirkendes Drehmoment sein.

Die vorgegebene Zykluszeit ist definiert als eine vorgegebene Zeitspanne, die die Transporteinrichtung benötigt, um die Führungskontur ein Mal vollständig zu umrunden. Man kann also sagen, dass die vorgegebene Zykluszeit die Zeit ist, die die Transporteinrichtung benötigt, insbesondere benötigen darf, um entlang der Führungskontur ein Mal um 360° zu rotieren. Die Formatgröße des biegeschlaffen Elements ist insbesondere durch die Breite des zu transportierenden, biegeschlaffen Elements, das insbesondere als ein Elektrodensheet und/oder Monozelle ausgebildet ist, bestimmt. Die Synchronisationsstrecke ist insbesondere eine Wegstrecke, die erforderlich ist, um das biegeschlaffe Element unter Bewegung der Transporteinrichtung, insbesondere von einem kontinuierlichen System, aufzunehmen oder abzulegen. Das kontinuierliche System weist bspw. ein Förderband auf, das sich kontinuierlich, insbesondere mit einer konstanten Geschwindigkeit, bewegt. Das Drehmoment, das durch die Transporteinrichtung auf die Antriebswelle wirkt, ist abhängig von dem Abstand zwischen der Rotationsachse der Antriebswelle und der Transporteinrichtung. Insbesondere wird die Führungskontur so gestaltet, dass dieses Drehmoment bei einem maximalen Abstand zwischen der Rotationsachse der Antriebswelle und der Transporteinrichtung einen vorbestimmten Schwellwert nicht überschreitet.

Die vorstehende Auflistung von Faktoren, welche die Geometrie der Führungskontur beeinflussen können, ist lediglich beispielhaft, und somit nicht als limitierend zu betrachten.

Man kann also auch sagen, dass die Führungskontur insbesondere derart gestaltet ist, dass es möglich ist, biegeschlaffe Elemente, insbesondere Elektrodensheets und/oder Monozellen, an einer ersten Position, insbesondere innerhalb eines ersten Bereichs, auf- bzw. abzunehmen und an einer zweiten Position, insbesondere innerhalb eines zweiten Bereichs, wieder abzulegen. Insbesondere ist die Führungskontur derart ausgebildet, dass die Transporteinrichtung unter Bewegung, die biegeschlaffen Elemente von einem kontinuierlichen System abnehmen oder auf diesem ablegen kann, insbesondere derart, dass die Transporteinrichtung zum einen auf die Geschwindigkeit des kontinuierlichen System synchronisiert, also an die Geschwindigkeit des kontinuierlichen Systems angepasst, wird, und zum anderen für einen vorbestimmten Bereich im Wesentlichen parallel zum kontinuierlichen System ausgerichtet ist, um das biegeschlaffe Element in diesem vorbestimmten Bereich von dem kontinuierlichen System abzunehmen oder auf dem kontinuierlichen System abzulegen.

Zum Beispiel werden bei der Herstellung von Monozellen für Batteriezellen durch Lamination im Bereich der Stapelbildung durch die Vorrichtung, insbesondere die Transporteinrichtung, von einem zentralen Förderband in der Bewegung aufgenommen und an einem anderen Ort, z.B. einem Vakuumschlitten, im Stillstand abgelegt. Ferner kann die Vorrichtung auch in anderen Arten der Batteriezellfertigung, wie bspw. beim Z-Falten und/oder in anderen Prozessen als die Batteriezellfertigung, in denen biegeschlaffe Elemente von einem ersten Bereich in einen zweiten Bereich transportiert werden müssen, eingesetzt werden.

Ferner weist die Vorrichtung, z.B. durch das Anordnen der Antriebswelle in der Durchgangsöffnung der Führungsplatte, eine kompakte Bauweise auf, was eine Integration der Vorrichtung in eine Anlage, wie bspw. eine Transporteinheit zum Transportieren von biegeschlaffen Elementen, vereinfacht.

Somit ermöglicht die erfindungsgemäße Vorrichtung, mittels der über die Führungskontur synchronisierte Transporteinrichtung, biegeschlaffe Elemente von einem ersten Bereich in einen zweiten Bereich zu transportieren, und hierbei Taktzeiten, insbesondere beim Überführen der biegeschlaffen Elemente von einem kontinuierlichen System zu einem diskreten System, oder umgekehrt, zu verbessern und somit den Output der Anlage zu verbessern, insbesondere zu erhöhen.

Darüber hinaus ist die Vorrichtung robust ausgeführt, um Fehler und/oder Ausfälle im Betrieb zu reduzieren.

Mit anderen Worten kann man sagen, dass die erfindungsgemäße Vorrichtung es ermöglicht, biegeschlaffe Elemente, wie bspw. Elektrodenlagen und/oder Monozelle für die Batterie- und/oder Brennstoffzellenfertigung schonend, insbesondere beschädigungsarm, weiter insbesondere im Wesentlichen beschädigungsfrei, in einem ersten Bereich aufzunehmen, zu transportieren, und in einem zweiten Bereich abzulegen. Der schonende Transport ermöglicht es zusätzlich eine Ausschussquote von schadhaften Elektrodenlagen und/oder Monozellen zu reduzieren und damit den Output der Anlage weiter zu verbessern. Darüber hinaus ermöglicht die Vorrichtung eine im Wesentlichen positionsgenaue Abnahme und/oder ein im Wesentlichen positionsgenaues Ablegen der biegeschlaffen Elemente, wodurch der Output der Anlage weiter verbessert werden kann.

Gemäß einer Ausführungsform weist die Transporteinrichtung eine Transportplatte und zumindest ein Führungselement auf, wobei die Transportplatte eine Aufnahmefläche zur Aufnahme des biegeschlaffen Elements aufweist, das zumindest eine Führungselement dreh- und axialfest mit der Transportplatte gekoppelt ist, und das zumindest eine Führungselement der Transporteinrichtung mittels der Führungskontur der zumindest einen Führungsplatte geführt ist.

Die Transportplatte ist insbesondere als eine Saug- und/oder Unterdruckplatte ausgebildet. Zusätzlich oder alternativ kann die Transporteinrichtung an verschiedene Formate und/oder Größen der biegeschlaffen Elemente anpassbar sein, bspw. indem die Transportplatte austauschbar gestaltet ist, und erzielt somit eine höhere Flexibilität. Darüber hinaus kann die Vorrichtung schnell und unkompliziert an verschiedene Formate und/oder Größen der biegeschlaffen Elemente angepasst werden, wodurch eine für eine solche Anpassung erforderliche Umrüstzeit, und somit ein Stillstand der Vorrichtung, reduziert ist. Die Transporteinrichtung kann auch als Greifer und die Transportplatte kann entsprechend auch als Greiferplatte bezeichnet werden. Das Führungselement ist direkt oder indirekt, z.B. über ein Träger- bzw. Stützelement, mit der Transportplatte gekoppelt.

Gemäß einer Ausführungsform weist das zumindest eine Führungselement zumindest eine Rolle auf, die mit der Führungskontur der zumindest einen Führungsplatte in Kontakt seiend angeordnet ist. Insbesondere ist das zumindest eine Führungselement gegen die Führungskontur vorgespannt. Hierfür wird das Führungselement durch ein Vorspannelement, wie beispielweise eine Federelement, aktiv an die Führungskontur gedrückt (vorgespannt). Für den Fall, dass die Führungskontur vertiefungsartig ausgebildet ist und das Führungselement an einer Innenkontur der Führungskontur geführt wird, wird die Vorspannung ferner zumindest teilweise durch die Zentrifugalkraft realisiert, die durch die Bewegung der Transporteinrichtung hervorgerufen wird. Für den Fall, dass die Führungskontur vorsprungartig ausgebildet ist und das Führungselement an einer Außenkontur der Führungskontur geführt wird, muss die Vorspannung im Wesentlichen vollständig durch das Vorspannelement, z.B. ein Federelement, das das Führungselement aktiv gegen die Führungskontur drückt, erzeugt werden. Insbesondere weist das zumindest eine Führungselement zwei Rollen auf, die in der Umlauf- bzw. Bewegungsrichtung der Transporteinrichtung beabstandet zueinander an dem Führungselement angeordnet sind. Dadurch wird eine Positionsgenauigkeit der Transporteinrichtung relativ zur Führungsplatte, insbesondere zur Führungskontur, verbessert. So kann zum Beispiel eine zumindest abschnittweise parallele Anordnung der Transporteinrichtung zu einem kontinuierlichen System sichergestellt werden.

Gemäß einer Ausführungsform weist die Transporteinrichtung ferner eine Medienführung auf, und die Aufnahmefläche weist zumindest eine Öffnung auf, die mit der Medienführung fluidleitend gekoppelt ist.

Insbesondere ist die Medienführung dazu eingerichtet, Druckluft, insbesondere mit einem negativen Druck, zu führen und so an der zumindest einen Öffnung der Aufnahmefläche einen Saugeffekt bzw. Unterdruck zu erzeugen. Über den so erzeugten Unterdruck wird das biegeschlaffe Element auf der Aufnahmefläche gehalten. Darüber hinaus kann die Medienführung auch dazu genutzt werden, einen Überdruck bzw. Druckstoß an der zumindest einen Öffnung der Aufnahmefläche zu erzeugen, um so ein Ablegen des biegeschlaffen Elements, z.B. in den zweiten Bereich, zu vereinfachen.

Insbesondere weist die Aufnahmefläche eine Vielzahl von Öffnungen auf, die mit der Medienführung fluidleitend verbunden sind. Weiter insbesondere ist die Vielzahl von Öffnungen im Wesentlichen gleichmäßig verteilt an der Aufnahmeoberfläche angeordnet. Dadurch kann eine gleichmäßige Unter- oder Überdruckverteilung über die Fläche des biegeschlaffen Elements umgesetzt werden, und so eine schonende, insbesondere beschädigungsarme, weiter insbesondere beschädigungsfreie, Aufnahme, einen schonenden, insbesondere beschädigungsarmen, weiter insbesondere beschädigungsfreien Transport, und eine schonende, insbesondere beschädigungsarme, weiter insbesondere beschädigungsfreie, Ablage ermöglicht werden.

Gemäß einer Ausführungsform weist die Hubeinrichtung ein Führungselement und ein Kopplungselement auf, wobei das Führungselement dreh- und axialfest mit der Antriebswelle gekoppelt ist und das Kopplungselement an in der zweiten Richtung einem Ende mit der Transporteinrichtung gekoppelt ist und an dem in der zweiten Richtung anderen Ende in dem Führungselement entlang bzw. in der zweiten Richtung linear geführt ist.

Dabei ist das Kopplungselement gelenkig, insbesondere über ein Drehgelenk, mit der Transporteinrichtung schwenkbar gekoppelt. Das Führungselement ist integral einstückig mit der Antriebswelle ausgebildet. Alternativ ist das Führungselement separat von der Antriebswelle ausgebildet und dreh- und axialfest, z.B. mittels eines Presssitzes, mit der Antriebswelle verbunden. Das Kopplungselement weist eine vorbestimmte Länge auf und ist insbesondere stab- und/oder stangenartig ausgebildet. Das Führungselement weist entsprechend dem Kopplungselement eine oder mehrere Führungsbuchen zur linearen Führung des stab- und/oder stangenartigen Kopplungselements in der zweiten Richtung auf. Die lineare Führung des Kopplungselements in den Führungsbuchsen ermöglicht eine Umsetzung der veränderlichen Abstände zwischen der Rotationsachse der Antriebswelle und der Transporteinrichtung in Abhängigkeit der Position der Transporteinrichtung entlang der Führungskontur. Die Führungsbuchsen können bspw. als Gleithülsen oder als Wälzhülsen ausgebildet sein.

Gemäß einer Ausführungsform weist die Hubeinrichtung ein Führungselement und ein Kopplungselement auf, wobei das Führungselement dreh- und axialfest mit der Antriebswelle gekoppelt ist, und das Kopplungselement als eine Gelenkgestänge ausgebildet ist, das an in der zweiten Richtung einem Ende mit der Transporteinrichtung gekoppelt ist und an dem in der zweiten Richtung anderen Ende mit dem Führungselement gekoppelt ist.

Das Gelenkgestänge ist dabei an einem Ende schwenkbar, insbesondere mittels eines Drehgelenks, mit dem Führungselement gekoppelt, und an einem anderen Ende schwenkbar, insbesondere mittels eines Drehgelenks, mit der Transporteinrichtung gekoppelt. Ferner weist das Gelenkgestänge insbesondere eine gekrümmte Form auf. Das Führungselement ist integral einstückig mit der Antriebswelle ausgebildet. Alternativ ist das Führungselement separat von der Antriebswelle ausgebildet und ist dreh- und axialfest, z.B. mittels eines Presssitzes und/oder mittels einer Schraubverbindung, mit der Antriebswelle verbunden.

Gemäß einer Ausführungsform weist die Antriebseinheit ferner ein Gehäuse und einen Antriebsmotor auf, wobei die Antriebswelle zumindest teilweise in dem Gehäuse aufgenommen und in diesem gelagert ist.

Der Antriebsmotor ist dazu eingerichtet, die Antriebswelle mit unterschiedlichen, insbesondere veränderlichen, Geschwindigkeiten anzutreiben. Hierfür ist der Antriebsmotor entsprechend ansteuerbar und ermöglicht so die Anpassung der Geschwindigkeit der Transporteinrichtung an die verschiedenen, während eines Zyklus, also einer Bewegung der Transporteinrichtung um 360° entlang der Führungskontur, erforderlichen Geschwindigkeiten, wie z.B. zur Synchronisation auf die Geschwindigkeit des kontinuierlichen Systems und/oder ein Stillstand in einem vorbestimmten Bereich zum Aufnehmen und/oder Ablegen des biegeschlaffen Elements im Stillstand etc.

Gemäß einer Ausführungsform weist die Antriebswelle eine Drehdurchführung zum Führen von Medien auf. Gemäß einer weiteren Ausführungsform ist die Drehdurchführung in der Antriebswelle mit der Medienführung der Transporteinrichtung fluidleitend gekoppelt. Alternativ ist es auch denkbar eine von der Antriebswelle separate Drehdurchführung zum Führen der Medien, insbesondere zur Medienführung der Transporteinrichtung, vorzusehen.

Somit dient die Drehdurchführung zur Führung eines Mediums, insbesondere Druckluft, zur Transporteinrichtung, wo das Medium mittels der Medienführung zu der zumindest einen Öffnung an der Aufnahmefläche geführt wird. So kann an der Transporteinrichtung auf dort integrierte Mittel zur Drucklufterzeugung verzichtet werden. Dadurch werden ein für die Transporteinrichtung erforderlicher Bauraum sowie ein Gewicht bzw. eine Masse gegenüber solchen Transporteinrichtungen mit integrierten Mittel zur Drucklufterzeugung reduziert.

Ein weiterer Aspekt der Erfindung bezieht sich auf eine Transporteinheit zum Transportieren von biegeschlaffen Elementen, insbesondere für die Herstellung von Batterie- und/oder Brennstoffzellen. Die Transporteinheit umfasst ein kontinuierliches System, das sich kontinuierlich, insbesondere mit einer im Wesentlichen konstanten Geschwindigkeit, bewegt, ein diskretes System, das sich taktweise bewegt, und eine, insbesondere erfindungsgemäße, Vorrichtung zum Transportieren von biegeschlaffen Elementen. Dabei ist die Vorrichtung derart zwischen dem kontinuierlichen System und dem diskreten System angeordnet, dass die Vorrichtung ein biegeschlaffes Element von dem kontinuierlichen System aufnimmt und auf dem diskreten System ablegt, oder die Vorrichtung ein biegeschlaffes Element von dem diskreten System aufnimmt und auf dem kontinuierlichen System ablegt.

Die Transporteinheit ist insbesondere in einer Batteriezellfertigungsanlage für den Transport von Elektrodensheets und/oder Monozellen einsetzbar. Dabei ermöglicht die Transporteinheit einen möglichst schonenden, insbesondere beschädigungsarmen oder gar beschädigungsfreien, Transport von biegeschlaffen Elementen von einem ersten System zu einem zweiten System. Dabei kann der Transport insbesondere einen Wechsel von einem kontinuierlichen System und einem diskreten System, oder umgekehrt, beinhalten. In einem solchen Fall ist die Vorrichtung zum Transportieren von biegeschlaffen Elementen dazu eingerichtet, während des Transports der biegeschlaffen Elemente, insbesondere Elektrodensheets und/oder Monozellen, einen Wechsel von einem kontinuierlichen System auf ein diskretes System, oder umgekehrt, zu ermöglichen.

Ein weiterer Aspekt der Erfindung bezieht sich auf ein Verfahren zum Transportieren von biegeschlaffen Elementen, insbesondere für die Herstellung von Batterie- und/oder Brennstoffzellen. Das Verfahren umfasst die folgenden Schritte, die nicht zwingend in angegebener Reihenfolge durchzuführen sind:
- Bereitstellen einer Vorrichtung zum Transportieren von biegeschlaffen Elementen, insbesondere einer vorstehend und nachfolgend beschriebenen, erfindungsgemäßen Vorrichtung, wobei die Vorrichtung zumindest eine Transporteinrichtung und eine Antriebseinheit aufweist,
- Aufnehmen, durch die Transporteinrichtung der Vorrichtung, von zumindest einem biegeschlaffen Element in einem ersten Bereich,
- Transportieren, mittels der Transporteinrichtung der Vorrichtung, des zumindest einen biegeschlaffen Elements von dem ersten Bereich in einen zweiten Bereich, und
- Ablegen, durch die Transporteinrichtung der Vorrichtung, des zumindest einen biegeschlaffen Elements in dem zweiten Bereich, und
- Bewegen, durch die Antriebseinheit der Vorrichtung, der Transporteinrichtung von dem zweiten Bereich in den ersten Bereich.

Zum Beispiel führt die Vorrichtung zum Transportieren von biegeschlaffen Elementen die folgenden Abläufe, insbesondere wiederholt, aus:
- Anpassen der Geschwindigkeit der Transporteinrichtung, insbesondere der Transportplatte an die Geschwindigkeit des kontinuierlichen Systems in einem ersten Bereich, in dem das biegeschlaffe Element durch die Transporteinrichtung von dem kontinuierlichen System abgenommen werden soll;
- Abnehmen eines biegeschlaffen Elements von dem kontinuierlichen System durch die Transporteinrichtung, insbesondere indem ein Unterdruck, weiter insbesondere ein Vakuum, an der Transportplatte, insbesondere der Aufnahmefläche, erzeugt wird, um das biegeschlaffe Element auf der Transportplatte "festzuhalten";

- Bewegen, insbesondere mit einer von der Geschwindigkeit des kontinuierlichen Systems verschiedenen Geschwindigkeit, der Transporteinrichtung entlang der Führungskontur der Führungsplatte bis zu einem Ablageplatz, an dem das von der Transporteinrichtung transportierte, biegeschlaffe Element an das diskrete System übergeben wird;
- Stoppen der Bewegung der Transporteinrichtung, insbesondere der Transportplatte, entlang der Führungskontur der Führungsplatte auf Höhe des Ablageplatzes, und Ablegen des biegeschlaffen Elements von der Transporteinrichtung auf den Ablageplatz im Stillstand, bspw. indem der Unterdruck, insbesondere das Vakuum, an der Transportplatte, insbesondere an der Aufnahmefläche, z.B. durch einen Druckluftimpuls, abgebaut wird und im Wesentlichen zeitgleich am Ablageplatz ein Unterdruck, insbesondere ein Vakuum, aufgebaut wird, um das biegeschlaffe Element auf dem Ablageplatz "festzuhalten",
- Bewegen der Transporteinrichtung entlang der Führungskontur der Führungsplatte bis zum ersten Bereich.

Insbesondere kann das kontinuierliche System, bspw. ein Förderband, einen Unterdruck, insbesondere ein Vakuum, an einer Fläche, auf bzw. an der die biegeschlaffen Elemente transportiert werden, erzeugen, um die biegeschlaffen Elemente während des Transports auf dieser Fläche "festzuhalten". Damit können die biegeschlaffen Elemente von dem kontinuierlichen System auch "über Kopf", also an einer Fläche, die nach unten zeigt, d.h., dem Boden zugewandt ist, transportiert werden, ohne von dieser Fläche herunterzufallen. Ein solches Förderband kann auch als ein Vakuumband bezeichnet werden.

Der Ablageplatz kann insbesondere ein Transportschlitten eines Linearsystems sein, der eine als Saugplatte bzw. Unterdruck- oder Vakuumplatte ausgebildete Transportplatte aufweist. Es ist auch denkbar, dass der Ablageplatz als ein Stapelplatz zum Stapeln mehrerer biegeschlaffer Elemente, insbesondere mehrerer Elektrodensheets und/oder Monozellen, aufeinander, ausgebildet ist.

Gemäß einer Ausführungsform bewegt die Antriebseinheit die Transporteinrichtung in dem ersten Bereich mit einem ersten Geschwindigkeitsprofil, zwischen dem ersten Bereich und dem zweiten Bereich mit einem zweiten Geschwindigkeitsprofil, in dem zweiten Bereich mit einem dritten Geschwindigkeitsprofil, und zwischen dem zweiten Bereich und dem ersten Bereich mit einem vierten Geschwindigkeitsprofil.

Dabei sind das erste Geschwindigkeitsprofil im ersten Bereich und das dritte Geschwindigkeitsprofil im zweiten Bereich darauf abgestimmt, ob der erste Bereich bzw. der zweite Bereich einem Abschnitt des kontinuierlichen Systems oder einem Abschnitt des diskreten Systems entspricht. Das zweite Geschwindigkeitsprofil und das vierte Geschwindigkeitsprofil in den Zwischenbereichen zwischen dem ersten Bereich und dem zweiten Bereich, sind insbesondere darauf abgestimmt, ein durch die Transporteinrichtung auf die Antriebswelle wirkendes Drehmoment unterhalb eines vorgegebenen Schwellwerts zu halten. Ferner können die Geschwindigkeitsprofile in den Zwischenbereichen auf vorgegebene Gesamtzykluszeiten abgestimmt sein, d.h., die Geschwindigkeiten in den Zwischenbereichen können so gewählt werden, dass für den Gesamtbewegungsablauf der Transporteinrichtung eine vorgegebene Gesamtzykluszeit erreicht wird. Zum Beispiel, wenn die vorgegebene Gesamtzykluszeit 650 ms beträgt, und ein Abnehmen des biegeschlaffen Element von dem kontinuierlichen System mit dem ersten Geschwindigkeitsprofil im ersten Bereich 50 ms dauert und eine Übergabe des biegeschlaffen Elements an das diskrete System mit dem dritten Geschwindigkeitsprofil im zweiten Bereich 200 ms dauert, können die verbleibenden 400 ms auf die beiden Zwischenbereiche, insbesondere gleichmäßig, aufgeteilt werden, sodass das zweite Geschwindigkeitsprofil und das vierte Geschwindigkeitsprofil so gewählt werden, dass eine Zeitdauer für den Transport des biegeschlaffen Elements von dem ersten Bereich in den zweiten Bereich im Wesentlichen 200 ms beträgt und ein Transport der Transporteinrichtung von dem zweiten Bereich in den ersten Bereich, ein sogenannter Rückhub, ebenfalls etwa 200 ms beträgt.

Gemäß einer Ausführungsform sind das erste Geschwindigkeitsprofil, das zweite Geschwindigkeitsprofil, das dritte Geschwindigkeitsprofil und das vierte Geschwindigkeitsprofil voneinander verschieden oder zumindest teilweise gleich, und/oder zumindest eines von dem ersten Geschwindigkeitsprofil, dem zweiten Geschwindigkeitsprofil, dem dritten Geschwindigkeitsprofil und dem vierten Geschwindigkeitsprofil zumindest abschnittsweise eine Geschwindigkeit aufweist, die im Wesentlichen Null ist.

Insbesondere tritt die Geschwindigkeit, die im Wesentlichen Null ist, im Bereich des diskreten Systems auf, also innerhalb des ersten Geschwindigkeitsprofils oder des dritten Geschwindigkeitsprofils.

Gemäß einer Ausführungsform ist der erste Bereich als ein Abschnitt eines kontinuierlichen Systems ausgebildet und der zweite Bereich ist als ein Abschnitt eines diskreten Systems ausgebildet, oder der erste Bereich ist als ein Abschnitt eines diskreten Systems ausgebildet und der zweite Bereich ist als ein Abschnitt eines kontinuierlichen Systems ausgebildet.

Gemäß einer Ausführungsform, wenn der erste Bereich als der Abschnitt des kontinuierlichen Systems ausgebildet ist und der zweite Bereich als der Abschnitt des diskreten Systems ausgebildet ist, umfasst das erste Geschwindigkeitsprofil eine Geschwindigkeit, die im Wesentlichen einer Geschwindigkeit des kontinuierlichen Systems entspricht, und das dritte Geschwindigkeitsprofil umfasst eine Geschwindigkeit, die im Wesentlichen Null ist, oder, wenn der erste Bereich als der Abschnitt des diskreten Systems ausgebildet ist und der zweite Bereich als der Abschnitt des kontinuierlichen Systems ausgebildet ist, umfasst das erste Geschwindigkeitsprofil eine Geschwindigkeit, die im Wesentlichen Null ist und das dritte Geschwindigkeitsprofil umfasst eine Geschwindigkeit, die im Wesentlichen einer Geschwindigkeit des kontinuierlichen Systems entspricht.

Weitere, die Erfindung verbessernde Maßnahmen werden nachstehend gemeinsam mit der Beschreibung bevorzugter Ausführungsbeispiele der Erfindung anhand der Figuren näher dargestellt.
- Fig. 1: zeigt eine beispielhafte Teildarstellung einer Vorrichtung zum Transportieren von biegeschlaffen Elementen gemäß einer Ausführungsform der Erfindung in einer perspektivischen Ansicht.
- Fig. 2: zeigt eine beispielhafte Teildarstellung einer Vorrichtung zum Transportieren von biegeschlaffen Elementen gemäß einer Ausführungsform der Erfindung in einer Seitenansicht.
- Fig. 3: zeigt eine beispielhafte Teildarstellung einer Vorrichtung zum Transportieren von biegeschlaffen Elementen gemäß einer Ausführungsform der Erfindung in einer Seitenansicht.
- Fig. 4: zeigt eine Schnittansicht der in Fig. 3 gezeigten beispielhaften Teildarstellung der Vorrichtung zum Transportieren von biegeschlaffen Elementen gemäß einer Ausführungsform der Erfindung.
- Fig. 5: zeigt eine beispielhafte Teildarstellung einer Vorrichtung zum Transportieren von biegeschlaffen Elementen gemäß einer Ausführungsform der Erfindung in einer Seitenansicht.
- Fig. 6: zeigt eine beispielhafte Teildarstellung einer Vorrichtung zum Transportieren von biegeschlaffen Elementen gemäß einer Ausführungsform der Erfindung in einer Längsschnittansicht.
- Fig. 7: zeigt eine beispielhafte Hubführung einer Vorrichtung zum Transportieren von biegeschlaffen Elementen gemäß einer Ausführungsform der Erfindung in einer Schnittansicht.
- Fig. 8: zeigt eine beispielhafte Hubführung einer Vorrichtung zum Transportieren von biegeschlaffen Elementen gemäß einer Ausführungsform der Erfindung in einer Schnittansicht.
- Fig. 9: zeigt eine beispielhafte Teildarstellung einer Vorrichtung zum Transportieren von biegeschlaffen Elementen gemäß einer Ausführungsform der Erfindung in einer perspektivischen Ansicht.
- Fig. 10: zeigt eine beispielhafte Hubführung einer Vorrichtung zum Transportieren von biegeschlaffen Elementen gemäß einer Ausführungsform der Erfindung in einer Vorderansicht.
- Fig. 11a: zeigt eine beispielhafte Führungsplatte einer Vorrichtung zum Transportieren von biegeschlaffen Elementen gemäß einer Ausführungsform der Erfindung in einer Vorderansicht.
- Fig. 11b: zeigt eine beispielhafte Führungsplatte einer Vorrichtung zum Transportieren von biegeschlaffen Elementen gemäß einer Ausführungsform der Erfindung in einer perspektivischen Ansicht von hinten.
- Fig. 12: zeigt eine beispielhafte Transporteinheit gemäß einer Ausführungsform der Erfindung.
- Fig. 13: zeigt ein Flussdiagramm eines beispielhaften Bewegungsablaufs einer Vorrichtung zum Transportieren von biegeschlaffen Elementen gemäß einer Ausführungsform der Erfindung.
- Fig. 14: zeigt ein Flussdiagramm eines beispielhaften Verfahrens zum Transportieren von biegeschlaffen Elementen gemäß einer Ausführungsform der Erfindung.
- Fig. 15: zeigt ein Flussdiagramm eines beispielhaften Ablaufs zur Herstellung einer Batteriezelle mittels Lamination.

Die Figuren sind lediglich schematischer Natur und dienen nur dem Verständnis der Erfindung. Die gleichen Elemente sind mit denselben Bezugszeichen versehen.

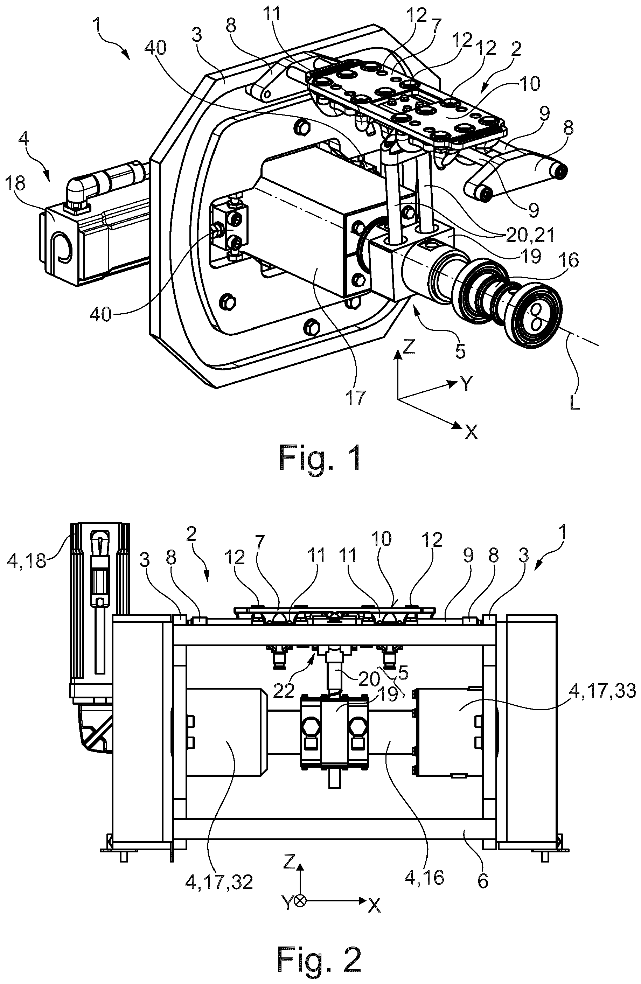

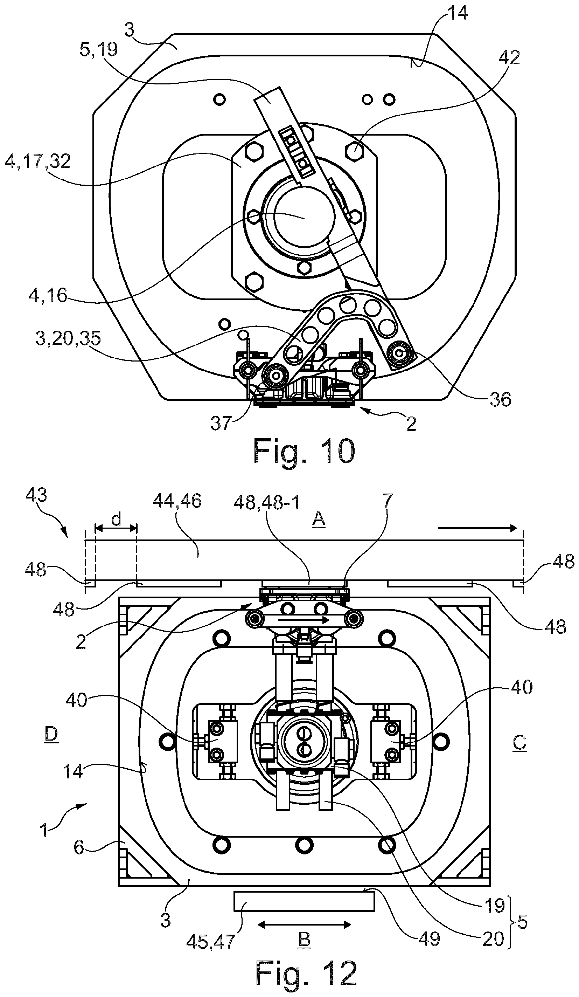

Fig. 1 bis Fig. 3 zeigen schematisch und beispielhaft Teildarstellungen einer Vorrichtung 1 zum Transportieren von biegeschlaffen Elementen 48 (siehe Fig. 12) gemäß einer beispielhaften Ausführungsform der Erfindung. Die Vorrichtung 1 weist eine Transporteinrichtung 2, zwei Führungsplatten 3 (in Fig. 1 ist nur eine Führungsplatte abgebildet), eine Antriebseinheit 4, eine Hubeinrichtung 5 und einen Montagerahmen 6 (in Fig. 1 nicht gezeigt) auf.

Die Transporteinrichtung 2 dient zum Transportieren von einem biegeschlaffen Element 48 von einem ersten Bereich A zu einem zweiten Bereich B (siehe Fig. 12). Die Transporteinrichtung 2 weist eine Transportplatte 7, und zwei Führungselemente 8 auf. Die Transportplatte 7 weist eine Aufnahmefläche 10 zur Aufnahme des biegeschlaffen Elements 48 (siehe Fig. 12) auf und ist hier beispielhaft auf zwei Stützelementen 9 fest angeordnet, wobei die zwei Stützelemente 9 an in einer ersten Richtung X beiden Enden mit je einem Führungselement 8 verbunden sind. Ferner weist die Transporteinrichtung 2 eine Medienführung 11 zur Führung von Gas und/oder Fluiden, insbesondere von druckbeaufschlagter Luft, auf und die Aufnahmefläche 10 weist mehrere Durchgangsöffnungen 12 auf. Das Gas und/oder Fluid wird der Medienführung 11 von außerhalb der Vorrichtung 1 zugeführt. Kanäle bzw. Leitungen der Medienführung 11 sind mit den Durchgangsöffnungen 12 der Aufnahmefläche 10 gekoppelt, wodurch zum Beispiel durch Erzeugen eines Unterdrucks bzw. Vakuums an den Öffnungen 12 das biegeschlaffe Element 48 auf der Aufnahmefläche 10 gehalten werden kann. Durch Erzeugen eines Überdrucks, bspw. einen Druckstoßes, an den Öffnungen 12, kann das biegeschlaffe Element von der Aufnahmefläche 10 gelöst werden. Die Medienführung 11 und die Transportplatte 7 können integral einstückig, z.B. mittels 3D-Druck, ausgebildet sein.

Jede Führungsplatte 3 dient zur Führung der Transporteinrichtung 2 und weist einen scheibenartigen oder plattenartigen Hauptkörper 13, eine in sich geschlossene Führungskontur 14 und eine Durchgangsöffnung 15 auf. Die Führungskontur 14 ist hier beispielhaft als eine rillen- oder nutartige Vertiefung in dem Hauptkörper 13 ausgebildet, in die die Führungselemente 8 der Transporteinrichtung 2 eingreifen, derart, dass eine Bewegung der Transporteinrichtung 2 dadurch geführt ist, dass die Führungselemente 8 mit der Führungskontur 14 in Kontakt sind, insbesondere zumindest leicht dagegen gedrückt werden und sich die Führungselemente 8 und damit die Transporteinrichtung 2 entlang der Führungskontur 14 bewegen. Die Führungskontur 14 weist dabei einen vorbestimmten, insbesondere nicht kreisförmigen Konturverlauf auf. Der vorbestimmte Konturverlauf wird in Abhängigkeit verschiedener Faktoren, wie bspw. eine vorgegebene Zykluszeit, eine Formatgröße des biegeschlaffen Elements 48, eine sogenannte Synchronisationsstrecke, und/oder ein durch die Transporteinrichtung 2 auf die Antriebswelle 16 wirkendes Drehmoment definiert. In der in Fig. 1 bis Fig. 3 gezeigten, beispielhaften Ausführungsform sind die zwei Führungsplatten 3 in der ersten Richtung X zueinander beabstandet angeordnet, wobei die jeweiligen Führungskonturen 14 einander zugewandt sind, sodass die Transporteinrichtung 2 an beiden Enden in der ersten Richtung X jeweils durch ein Führungselement 8 in je einer Führungskontur 14 geführt ist. Somit sind die Führungskonturen 14 der beiden Führungsplatten 3 so aufeinander abgestimmt, dass sie, wenn sie einander zugewandt angeordnet sind, deckungsgleich sind.

Die Antriebseinheit 4 dient zum Bewegen der Transporteinrichtung 2 und weist eine Antriebswelle 16, ein Gehäuse 17, in dem die Antriebswelle 16 zumindest teilweise aufgenommen ist, und einen Antriebsmotor 18 auf. Der Antriebsmotor 18 ist dazu eingerichtet, die Antriebswelle 16 zu rotieren, wobei eine Rotationsgeschwindigkeit der Antriebswelle 16 durch entsprechende Ansteuerung des Antriebsmotors 18 steuerbar, also veränderlich ist. Die Antriebseinheit 4 ist hier beispielhaft so angeordnet, dass sich eine Rotationsachse L der Antriebswelle 16 in der ersten Richtung X erstreckt und die Antriebswelle 16 an ihren Enden in der ersten Richtung X in den Durchgangsöffnungen 15 der Führungsplatten 3 aufgenommen ist. Man kann auch sagen, dass die Antriebswelle 16 sich zwischen den Führungsplatten 3 in der ersten Richtung X erstreckt und direkt oder indirekt in den Durchgangsöffnungen 15 der Führungsplatten 3 gelagert aufgenommen ist.

Die Hubeinrichtung 5 dient zur drehmomentübertragenden Kopplung der Antriebseinheit 4, insbesondere der Antriebswelle 16, und der Transporteinrichtung 2. Die Hubeinrichtung 5 weist ein Hub-Führelement 19 und ein Kopplungselement 20 auf. Das Hub-Führelement 19 ist dreh- und axialfest mit der Antriebswelle 16 gekoppelt und das Kopplungselement 20 koppelt die Transporteinrichtung 2 mit dem Hub-Führelement 19, derart, dass ein Abstand zwischen der Rotationsachse L der Antriebswelle 16 und der Transporteinrichtung 2 positionsabhängig variiert. Man kann auch sagen, dass die Transporteinrichtung 2 zusammen mit der Antriebswelle 16 rotiert und sich dabei entlang der Führungskontur 14 bewegt. Dabei gleicht die Hubeinrichtung 5 den sich in Abhängigkeit von der Position der Transporteinrichtung 2 entlang der Führungskontur 14 variierenden Abstand zwischen der Rotationsachse L und der Transporteinrichtung 2 aus. Somit wird die Transporteinrichtung 2 durch die Rotation der Antriebswelle 16 entlang der Führungskontur 14 geführt, wobei die Rotationsgeschwindigkeit der Antriebswelle, und damit eine Umlaufgeschwindigkeit der Transporteinrichtung 2 durch eine entsprechende Ansteuerung des Antriebsmotors 18 steuerbar bzw. regelbar ist. Insbesondere hängt die Rotationsgeschwindigkeit der Antriebswelle 16 von der Position der Transporteinrichtung 2 entlang der Führungskontur 14 ab, da die Transporteinrichtung 2 in verschiedenen Bereichen entlang der Führungskontur 14 mit unterschiedlichen Geschwindigkeiten bewegt werden kann.

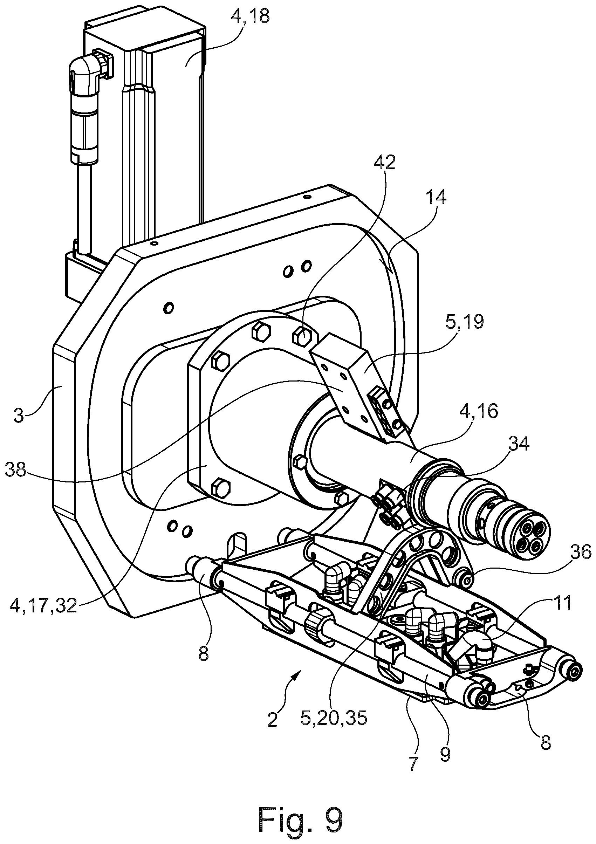

In den in Fig. 1 bis Fig. 7 gezeigten beispielhaften Ausführungsformen weist das Kopplungselement 20 der Hubeinrichtung 5 zwei parallel zueinander angeordnete Stangen 21 auf, die über eine Drehgelenkverbindung 22 mit der Transporteinrichtung 2 schwenkbar bzw. kippbar gekoppelt sind. Die Drehgelenkverbindung 22 ermöglicht eine im Wesentlichen parallele Führung der Transportplatte 7 zur Führungskontur 14 der Führungsplatte 3. Das Hub-Führelement 19 der Hubeinrichtung 5 ist hier beispielhaft integral einstückig mit der Antriebswelle 16 ausgebildet und weist zwei Führungsbuchsen 23 auf, in denen die Stangen 21 des Kopplungselements 20 axial bzw. linear entlang einer zweiten Richtung Z geführt sind. Dabei weisen die Führungsbuchen 23 eine Länge auf, die mindestens einer maximalen Abstandsänderung zwischen der Rotationsachse L und der Transporteinrichtung 2 entlang der Führungskontur 14, also einem maximalen Hubweg, entspricht. Die maximale Abstandsänderung entspricht einer Differenz zwischen einem kleinsten Abstand und einem größten Abstand zwischen der Rotationsachse L und der Transporteinrichtung 2 bei einer Bewegung der Transporteinrichtung 2 entlang der Führungskontur 14. Es ist aber auch denkbar, dass die Führungsbuchsen 23, und somit auch das Hub-Führelement 19, eine größere Länge aufweisen, also in der zweiten Richtung Z länger sind, wie beispielhaft in Fig. 9 gezeigt. Es ist auch denkbar, dass das Hub-Führelement 19 zumindest teilweise separat von der Antriebswelle 16 ausgebildet ist und dreh- und axialfest, bspw. mittels eines Presssitzes, an der Antriebswelle 16 angeordnet ist. Die Führungsbuchsen 23 sind bspw. als Gleitbuchsen oder als Wälzbuchsen, also Buchsen mit in Käfigen aufgenommenen Wälzkörpern, insbesondere Kugeln, ausgeführt.

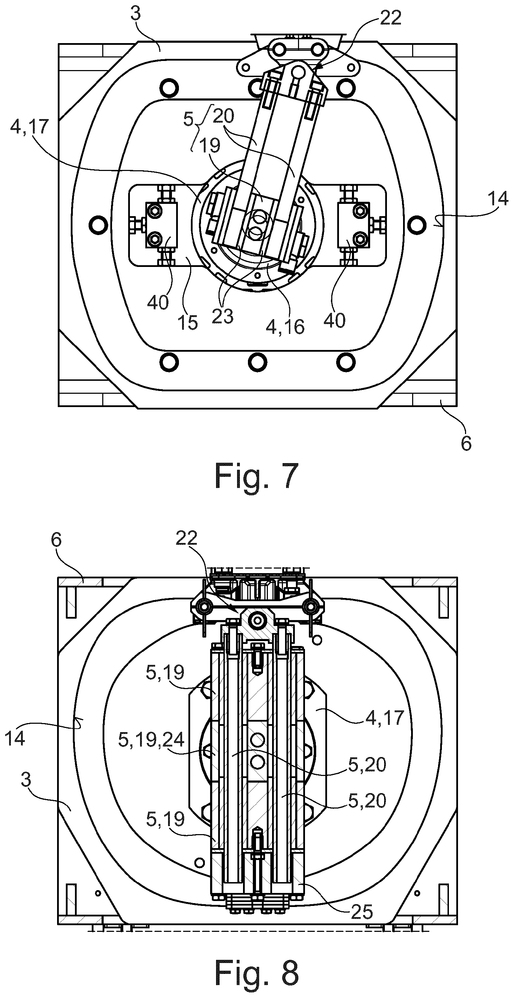

In Fig. 8 ist das Hub-Führelement 19 der Hubeinrichtung 5 in der zweiten Richtung Z länger ausgeführt. Hierbei ist das Hub-Führelement 19 dreiteilig ausgeführt, wobei ein mittlerer Abschnitt 24 integral einstückig mit der Antriebswelle 16 ausgeführt sein kann. In einem solchen Hub-Führelement 19 sind die Stangen 21 des Kopplungselements 20 entlang ihrer Längsrichtung bzw. entlang einer Hubrichtung (zweite Richtung Z) über einen größeren Abschnitt geführt als in der in Fig. 1 bis 7 gezeigten Ausführungsform, wodurch die auf das Hub-Führelement 19, insbesondere auf die Führungsbuchsen 23, wirkenden Kräfte geringer sind. Darüber hinaus ist es denkbar, an einem in der zweiten Richtung Z der Transporteinrichtung 2 gegenüberliegenden Ende des Hub-Führelements 19 eine Ausgleichsmasse 25 (siehe Fig. 8) vorzusehen, die dazu dient, die bei der Rotation der Antriebswelle 16 durch die Transporteinrichtung 2 auf die Antriebswelle 16 wirkenden Kräfte und Momente zu reduzieren bzw. auszugleichen. Dadurch ist es möglich, die Antriebseinheit 4, insbesondere die Antriebswelle 16 kleiner auszuführen, und somit den erforderlichen Bauraum für die Vorrichtung 1 zu reduzieren.

Da die Hubeinrichtung 5 gemäß den vorstehend beschriebenen Ausführungsformen den variierenden Abstand zwischen der Rotationsachse L und der Transporteinrichtung 2 mittels einer axialen bzw. linearen Führung des Kopplungselements 20 in dem Hub-Führelement 19 realisiert, kann eine solche Hubeinrichtung 5 auch als Linearhub bezeichnet werden.

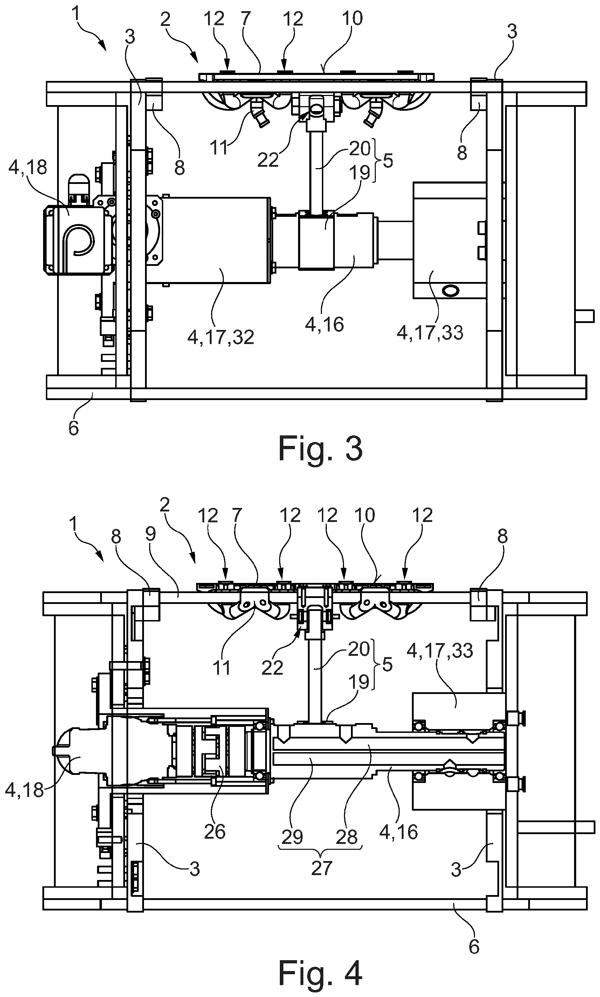

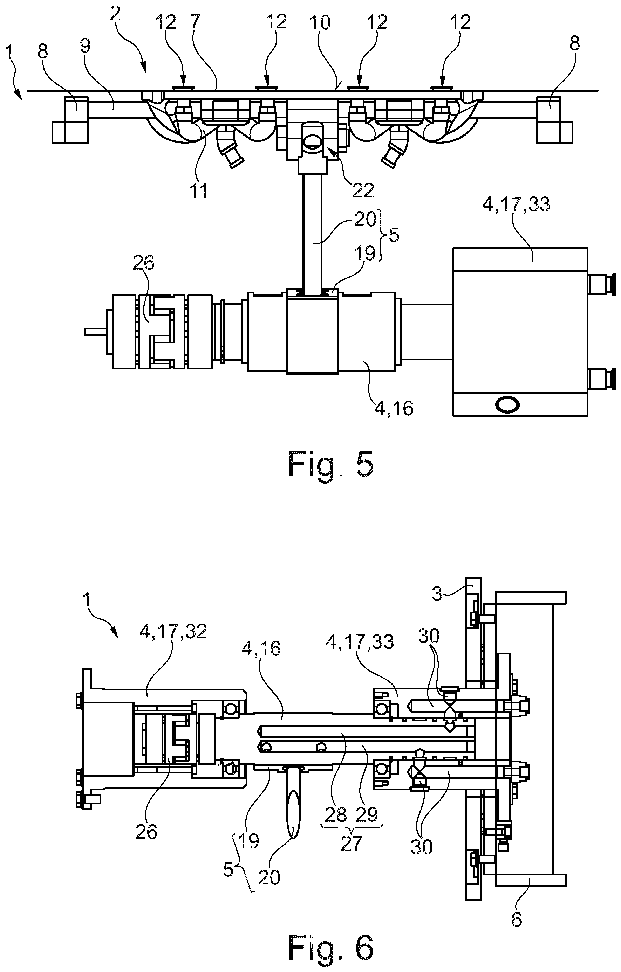

Wie in Fig. 4 dargestellt, ist der Antriebsmotor 18 mit der Antriebswelle 16 hier beispielhaft über ein Getriebe und eine Kupplung 26 drehmomentfest gekoppelt. Die Kupplung 26 ist als eine Klauenkupplung ausgebildet. Jedoch sind auch andere Kupplungsformen bzw. andere Kopplungselemente als das Getriebe und/oder die Kupplung 26 zur drehmomentfesten Verbindung zwischen dem Antriebsmotor 18 und der Antriebswelle 16 denkbar. Ferner weist die Antriebswelle 16 eine Drehdurchführung 27 auf, die hier beispielhaft als zwei voneinander separate Hohlbohrungen 28, 29 ausgeführt ist. Die Drehdurchführung 27 ist dazu eingerichtet, der Medienführung 11 der Transporteinrichtung 2 ein Medium, insbesondere ein Fluid, bspw. Druckluft, zuzuführen und/oder abzuführen. Das Medium wird, wie beispielhaft in Fig. 6 gezeigt, über Bohrungen 30, 31 in dem Gehäuse 17 der Antriebseinheit 4 von außerhalb zur Drehdurchführung 27 geführt und/oder von der Drehdurchführung 27 nach außerhalb abgeleitet.

In der in Fig. 1 bis Fig. 7 gezeigten beispielhaften Ausführungsform ist das Gehäuse 17 der Antriebseinheit 4 zweiteilig ausgeführt, wobei ein erster Gehäuseteil 32 an einem in der ersten Richtung X axialen Ende der Antriebswelle 16 angeordnet ist, und die Kupplung 26 aufnimmt sowie das eine axiale Ende der Antriebswelle 16 lagert. Ein zweiter Gehäuseteil 33 ist an einem in der ersten Richtung X anderen axialen Ende der Antriebswelle 16 angeordnet und umfasst die Bohrungen 30, 31, die das von außen zugeführte Medium in die Drehdurchführung 27 leiten. Von der Drehdurchführung 27 wird das Medium, insbesondere Druckluft, über Leitungen, bspw. Schläuche, Kanäle oder ähnliches zur Medienführung 11 der Transporteinrichtung 2 geleitet.

Fig. 9 und Fig. 10 zeigen eine weitere beispielhafte Ausführungsform der Vorrichtung 1 in einer Teildarstellung. Die hier gezeigte Ausführungsform unterscheidet sich von den vorstehend, mit Bezug zu Fig. 1 bis Fig. 8 beschriebenen Ausführungsformen im Wesentlichen durch die Hubeinrichtung 5. In der hier gezeigten Ausführungsform ist das Hub-Führelement 19 quaderähnlich ausgebildet und mittels Schrauben 34 dreh- und axialfest mit der Antriebswelle 16 gekoppelt. Das Kopplungselement 20 ist als ein Gelenkgestänge 35 ausgebildet, das an einem Ende über ein erstes Drehgelenk 36 mit dem Hub-Führelement 19 schwenkbar gekoppelt ist, und an dem anderen Ende über ein zweites Drehgelenk 37 (siehe Fig. 10) mit der Transporteinrichtung 2 gekoppelt ist. Das Gelenkgestänge 35 weist eine, insbesondere in einer Ebene, gekrümmte Form auf. Ein Längsende des Hub-Führelements 19, das dem mit dem Gelenkgestänge 35 gekoppelten Ende des Hub-Führelements 19 gegenüberliegend angeordnet ist, weist einen Aufnahmebereich 38 auf, der dazu vorbereitet und eingerichtet ist, die Ausgleichsmasse 25 aufzunehmen. Ferner unterscheiden sich auch die Führungsplatte 3 und die Transporteinrichtung 2 geometrisch von der Führungsplatte 3 und der Transporteinrichtung 2 gemäß der in Fig. 1 bis Fig. 7 gezeigten Ausführungsform. Darüber hinaus ist in der in Fig. 9 und Fig. 10 gezeigten Ausführungsform der Antriebsmotor 18 um 90° gedreht angeordnet, also vertikal statt horizontal wie in Fig. 1 bis Fig. 6 gezeigt. Die Anordnung des Antriebsmotors 18 relativ zum Rest der Vorrichtung 1 kann in Abhängigkeit des zur Verfügung stehenden Bauraums und/oder der Anordnung der Vorrichtung 1, z.B. mehrere dieser Vorrichtungen 1 nebeneinander, in einer Anlage, z.B. zur Herstellung von Batterien- und/oder Brennstoffzellen, gewählt werden.

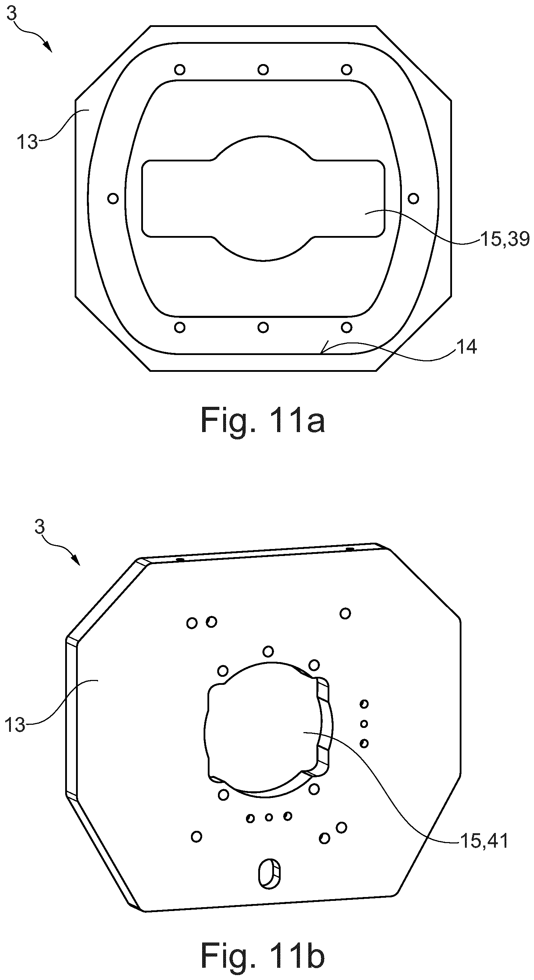

Fig. 11a und Fig. 11b zeigen unterschiedliche Ausführungsformen der Führungsplatten 3, wobei Fig. 11a die Führungsplatte 3 der in Fig. 1 bis Fig. 6 gezeigten Ausführungsform abbildet und Fig. 11b die Führungsplatte 3 der in Fig. 8 bis Fig. 10 gezeigten Ausführungsformen abbildet. Im Wesentlichen unterscheiden sich die beiden Führungsplatten 3 in der Form der Durchgangsöffnung 15 und der Kurvengeometrie (siehe auch Fig. 8). Die in Fig. 11a gezeigte Führungsplatte 3 hat ein längliche, rechteckähnlich ausgebildete Durchgangsöffnung 39, in der die in dem Gehäuse 17 gelagerte Antriebswelle 16 über sogenannte Push-Pull-Elemente 40 (siehe z.B., Fig. 1) positioniert ist. Die in Fig. 11b gezeigte Führungsplatte 3 hat eine im Wesentlichen rund ausgebildete Durchgangsöffnung 41, die durch das Gehäuse 17, in dem die Antriebswelle 16 axialfest, aber drehbar gelagert aufgenommen ist, auf einer der Transporteinrichtung 2 zugewandten Seite verdeckt wird. Das Gehäuse 17, bzw. die jeweiligen Gehäuseteile (Fig. 10 zeigt nur das erste Gehäuseteil 38) ist über mehrere Schrauben 42 an der Führungsplatte 3 befestigt.

Fig. 12 zeigt eine beispielhafte Transporteinheit 43 gemäß einer Ausführungsform der Erfindung. Die Transporteinheit 43 dient zum Transportieren von biegeschlaffen Elementen, insbesondere für die Herstellung einer Batterie- und/oder Brennstoffzelle und umfasst die vorstehend beschriebene Vorrichtung 1, ein kontinuierliches System 44 und ein diskretes System 45. Das kontinuierliche System 44 umfasst beispielsweise ein Förderband 46, das sich mit einer vorbestimmten, insbesondere konstanten, Geschwindigkeit bewegt. Das diskrete System 45 umfasst beispielsweise einen oder mehrere Transportschlitten 47, die sich taktweise zwischen zumindest zwei Positionen hin- und herbewegen.

Die Vorrichtung 1 ist derart zwischen dem kontinuierlichen System 44 und dem diskreten System 45 angeordnet, dass die Vorrichtung 1 ein biegeschlaffes Element 48 von dem Förderband 46 des kontinuierlichen Systems 44 aufnimmt und auf dem Transportschlitten 47 des diskreten Systems 45 ablegt. Das Förderband 46 ist hier beispielhaft als ein Vakuumband ausgebildet und transportiert die biegeschlaffen Elemente 48 auf einer Unterseite, indem die biegeschlaffen Element 48 mittels Unterdrucks bzw. Vakuums an der Unterseite festgehalten werden. Die einzelnen biegeschlaffen Elemente 48 sind auf dem Förderband 46 mit einem Abstand d zueinander beabstandet angeordnet. Der Abstand d ist dabei so gewählt, dass, wenn der Unterdruck bzw. das Vakuum am Förderband 46 im Bereich eines biegeschlaffen Elements 48 zur Übergabe an die Vorrichtung 1 abgebaut wird, die benachbarten biegeschlaffen Elemente 48 von dem Unterdruck- bzw. Vakuumabbau nicht betroffen sind und somit mit dem Förderband 46 weiter transportiert werden. Insbesondere kann der Abstand d etwa 50-75 mm betragen. Der Transportschlitten 47, der als Ablageplatz für das von der Vorrichtung 1 transportierte biegeschlaffe Element 48 fungiert, kann, wie in Fig. 12 gezeigt, in oder entgegen der Förderrichtung des Förderbands 46 (in der Zeichenebene) bewegt werden. Zusätzlich oder alternativ kann der Transportschlitten 47 auch in der Richtung senkrecht zur Zeichenebene bewegt werden.

Alternativ, jedoch in den Figuren nicht abgebildet, kann die Vorrichtung 1 ein biegeschlaffes Element 48 von dem diskreten System 45 aufnehmen und auf dem kontinuierlichen System 44 ablegen.

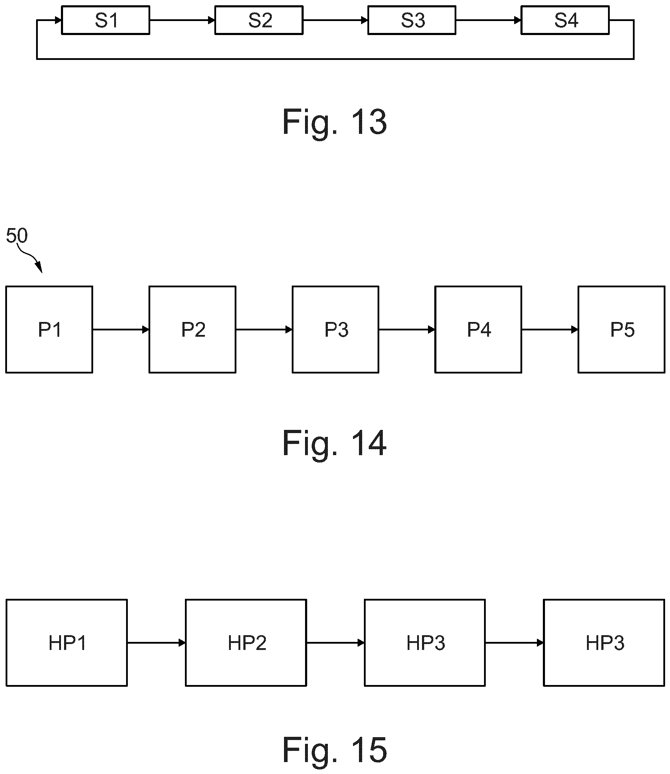

Fig. 13 zeigt ein Flussdiagramm eines beispielhaften Bewegungsablaufs der Vorrichtung 1 zum Transportieren von biegeschlaffen Elementen 48 gemäß einer Ausführungsform der Erfindung. Im Schritt S1 befindet sich die Transporteinrichtung 2 der Vorrichtung 1 im Bereich A (siehe Fig. 12), und bewegt sich parallel zum Förderband 46 mit im Wesentlichen derselben Geschwindigkeit wie das Förderband 46 und nimmt das biegeschlaffe Element 48-1 (siehe Fig. 12) von dem Förderband 46 ab, indem am Förderband 46 im Bereich des biegeschlaffen Elements 48-1 der Unterdruck bzw. das Vakuum lokal abgebaut und etwa zeitgleich ein Unterdruck bzw. Vakuum an der Aufnahmefläche 10 der Transporteinrichtung 2 erzeugt wird. Für diesen Ablauf benötigt die Vorrichtung 1 zum Beispiel etwa 50 ms. Im Schritt S2 wird das biegeschlaffe Element 48 auf der Transporteinrichtung 2 zum Bereich B (siehe Fig. 12) transportiert. Der Übergangsbereich bzw. Zwischenbereich, der zwischen dem Bereich A und dem Bereich B liegt, kann auch als Bereich C bezeichnet werden. Für den Transport ab der Aufnahme des biegeschlaffen Elements 48 im Bereich A bis zum Übergabepunkt zum Übergeben des biegeschlaffen Elements 48 im Bereich B benötigt die Vorrichtung beispielsweise etwa 200 ms. In einem Schritt S3 übergibt die Transporteinrichtung 2 das biegeschlaffe Element 48 an das diskrete System 45, indem das biegeschlaffe Element 48 auf dem Transportschlitten 47 abgelegt wird. Die Übergabe des biegeschlaffen Elements 48 von der Vorrichtung 1 an den Transportschlitten 47 erfolgt im Wesentlichen im Stillstand und bspw. analog zur Übernahme dieses biegeschlaffen Elements 48, also indem der Unterdruck bzw. das Vakuum an der Aufnahmefläche 10 der Transporteinrichtung 2 abgebaut wird und ungefähr gleichzeitig an einer Ablagefläche 49 des Transportschlittens 47 ein Unterdruck bzw. ein Vakuum erzeugt wird, um das biegeschlaffe Element 48 auf der Ablagefläche 49 festzuhalten. Für das Ablegen des biegeschlaffen Elements 48 im Stillstand benötigt die Vorrichtung zum Beispiel etwa 200 ms. Im Schritt S4 wird die Transporteinrichtung 2 leer, also ohne ein biegeschlaffes Element 48 zu transportieren, von dem Bereich B (siehe Fig. 12) in den Bereich A bewegt. Der Bereich zwischen dem Bereich B und dem Bereich A kann auch als Bereich D bezeichnet werden und die Bewegung der Transporteinrichtung 2 vom Bereich B in den Bereich A kann auch als Rückhub bezeichnet werden. Für den Rückhub braucht die Vorrichtung 1 beispielsweise etwa 200 ms. Im Bereich A angekommen, ist eine Zyklusbewegung der Transporteinrichtung 2 ein Mal abgeschlossen. Für einen gesamten Zyklus braucht die Vorrichtung 1 gemäß den vorstehend gegebenen Beispielen für die einzelnen Bereiche A bis D insgesamt etwa 650 ms.

Fig. 14 zeigt ein Flussdiagramm eines beispielhaften Verfahrens 50 zum Transportieren von biegeschlaffen Elementen gemäß einer beispielhaften Ausführungsform. In einem ersten Schritt P1 wird die Vorrichtung 1 zum Transportieren von biegeschlaffen Elementen 48 bereitgestellt, wobei die Vorrichtung 1 zumindest die Transporteinrichtung 2 und die Antriebseinheit 4 aufweist. In einem Schritt P2 nimmt die Transporteinrichtung 2 der Vorrichtung 1 das biegeschlaffe Element 48 in einem ersten Bereich (in Fig. 12 z.B., der Bereich A) auf. In einem Schritt P3 transportiert die Transporteinrichtung 2 der Vorrichtung 1 das biegeschlaffe Element 48 von dem ersten Bereich in einen zweiten Bereich (in Fig. 12 z.B., der Bereich B). In einem Schritt P4 legt die Transporteinrichtung 2 der Vorrichtung 1 das biegeschlaffe Element 48 in dem zweiten Bereich ab. In einem Schritt P5 wird die Transporteinrichtung 2 durch die Antriebseinheit 4 der Vorrichtung 1 von dem zweiten Bereich in den ersten Bereich bewegt.

Fig. 15 zeigt ein Flussdiagramm eines beispielhaften Ablaufs zur Herstellung einer Batteriezelle mittels Lamination zur Erläuterung, wofür die Vorrichtung 1 bei der Herstellung von Batteriezellen eingesetzt werden kann. Die Herstellung einer Batteriezelle mittels Laminierens umfasst die folgenden Hauptprozesse: Materialeinbringung (HP1), Herstellung einer Anodenhalbzelle (HP2), Vereinzelung von Kathoden und Herstellung von Monozellen (HP3) sowie Vereinzelung von Monozellen und Stapelbildung (HP4). Die Vorrichtung 1 kann bspw. im Hauptprozess HP4, also bei der Vereinzelung der Monozellen und der Stapelbildung, eingesetzt werden. Hier kann die Vorrichtung 1 insbesondere zur Abnahme der vereinzelten Monozelle, die von einem kontinuierlichen System 44 transportiert wird, zum Transport zu einem diskreten System und zur Abgabe der Monozelle an das diskrete System 45, z.B. ein Linearsystem, eingesetzt werden.

### BEZUGSZEICHENLISTE

- 1: Vorrichtung
- 2: Transporteinrichtung
- 3: Führungsplatte
- 4: Antriebseinheit
- 5: Hubeinrichtung
- 6: Montagerahmen
- 7: Transportplatte
- 8: Führungselement
- 9: Stützelement
- 10: Aufnahmefläche
- 11: Medienführung
- 12: Öffnung
- 13: Hauptkörper
- 14: Führungskontur
- 15: Durchgangsöffnung
- 16: Antriebswelle
- 17: Gehäuse
- 18: Antriebsmotor
- 19: Hub-Führelement
- 20: Kopplungselement
- 21: Stange
- 22: Drehgelenkverbindung
- 23: Führungsbuchse
- 24: mittlerer Abschnitt
- 25: Ausgleichsmasse
- 26: Kupplung
- 27: Drehdurchführung
- 28: Hohlbohrung
- 29: Hohlbohrung
- 30: Bohrung
- 31: Bohrung
- 32: erster Gehäuseteil
- 33: zweiter Gehäuseteil
- 34: Schraube
- 35: Gelenkgestänge
- 36: erstes Drehgelenk
- 37: zweites Drehgelenk
- 38: Aufnahmebereich
- 39: Durchgangsöffnung
- 40: Push-Pull-Element
- 41: Durchgangsöffnung
- 42: Schraube
- 43: Transporteinheit
- 44: kontinuierliches System
- 45: diskretes System
- 46: Förderband
- 47: Transportschlitten
- 48: biegeschlaffes Element
- 49: Ablagefläche
- 50: Verfahren

- A: erster Bereich
- B: zweiter Bereich
- C: dritter Bereich
- D: vierter Bereich
- d: Abstand
- L: Rotationsachse
- X: erste Richtung
- Z: zweite Richtung

## Patentansprüche

1. Vorrichtung (1) zum Transportieren von biegeschlaffen Elementen (48), insbesondere für die Herstellung einer Batterie- und/oder Brennstoffzelle, umfassend:
- eine Transporteinrichtung (2) zum Transportieren eines biegeschlaffen Elements (48) von einem ersten Bereich (A) zu einem zweiten Bereich (B),
- eine Führungsplatte (3) zur Führung der Transporteinrichtung (2),
- eine Antriebseinheit (4) zum Bewegen der Transporteinrichtung (2),
- eine Hubeinrichtung (5) zur Kopplung der Antriebseinheit (4) und der Transporteinrichtung (2), und
- einen Montagerahmen (6),
**wobei**
- die Führungsplatte (3) einen plattenartigen Hauptkörper (13), eine in sich geschlossene Führungskontur (14), die an dem plattenartigen Hauptkörper (13) vorgesehen ist, und eine Durchgangsöffnung (15) aufweist,
- die Transporteinrichtung (2) mittels der Führungskontur (14) geführt ist,
- die Antriebseinheit (4) eine Antriebswelle (16) aufweist, die sich in der ersten Richtung (X) erstreckt, und axial fest in der Durchgangsöffnung (15) der Führungsplatte (3) aufgenommen ist, und
- die Hubeinrichtung (5) die Transporteinrichtung (2) und die Antriebseinheit (4) drehmomentübertragend miteinander koppelt und dazu eingerichtet ist, einen Abstand zwischen der Antriebswelle (16) und der Transporteinrichtung (2) in einer zweiten Richtung (Z), der von der Position der Transporteinrichtung (2) relativ zur Führungsplatte (3) abhängig ist, anzupassen.

2. Vorrichtung (1) nach Anspruch 1, wobei die Transporteinrichtung (2) eine Transportplatte (7) und ein Führungselement (8) aufweist, wobei
die Transportplatte (7) eine Aufnahmefläche (10) zur Aufnahme des biegeschlaffen Elements (48) aufweist,
das Führungselement (8) dreh- und axialfest mit der Transportplatte (7) gekoppelt ist, und
das Führungselement (8) der Transporteinrichtung (2) mittels der Führungskontur (14) der Führungsplatte (3) geführt ist.

3. Vorrichtung (1) nach Anspruch 2, wobei das Führungselement (8) zumindest eine Rolle aufweist, die mit der Führungskontur (14) der Führungsplatte (3) in Kontakt seiend angeordnet ist.

4. Vorrichtung (1) nach Anspruch 2 oder 3, wobei die Transporteinrichtung (2) ferner eine Medienführung (11) aufweist, und die Aufnahmefläche (10) zumindest eine Öffnung (12) aufweist, die mit der Medienführung (11) fluidleitend gekoppelt ist.

5. Vorrichtung (1) nach einem der vorhergehenden Ansprüche, wobei die Hubeinrichtung (5) ein Hub-Führelement (19) und ein Kopplungselement (20) aufweist, wobei das Hub-Führelement (19) dreh- und axialfest mit der Antriebswelle (16) gekoppelt ist und das Kopplungselement (20) an in der zweiten Richtung (Z) einem Ende mit der Transporteinrichtung (2) gekoppelt ist und an dem in der zweiten Richtung (Z) anderen Ende in dem Hub-Führelement (19) in der zweiten Richtung (Z) linear geführt ist.

6. Vorrichtung (1) nach einem der Ansprüche 1 bis 4, wobei die Hubeinrichtung (5) ein Hub-Führelement (19) und ein Kopplungselement (20) aufweist, wobei das Hub-Führelement (19) dreh- und axialfest mit der Antriebswelle (16) gekoppelt ist, und das Kopplungselement (20) als ein Gelenkgestänge (35) ausgebildet ist, das an in der zweiten Richtung (Z) einem Ende mit der Transporteinrichtung (2) gekoppelt ist und an dem in der zweiten Richtung (Z) anderen Ende mit dem Hub-Führelement (19) gekoppelt ist.

7. Vorrichtung (1) nach einem der vorhergehenden Ansprüche, wobei die Antriebseinheit (4) ferner ein Gehäuse (17) und einen Antriebsmotor (18) aufweist, wobei die Antriebswelle (16) zumindest teilweise in dem Gehäuse (17) aufgenommen und in diesem gelagert ist.

8. Vorrichtung (1) nach einem der vorhergehenden Ansprüche, wobei die Antriebswelle (16) eine Drehdurchführung (27) zum Führen von Medien aufweist.

9. Vorrichtung (1) nach Anspruch 8, wobei die Drehdurchführung (27) in der Antriebswelle (16) mit der Medienführung (11) der Transporteinrichtung (2) fluidleitend gekoppelt ist.

10. Transporteinheit (43) zum Transportieren von biegeschlaffen Elementen (48), insbesondere für die Herstellung einer Batterie- und/oder Brennstoffzelle, umfassend:
- ein kontinuierliches System (44), das sich kontinuierlich bewegt,
- ein diskretes System (45), das sich taktweise bewegt, und
- eine Vorrichtung (1) zum Transportieren von biegeschlaffen Elementen (48), insbesondere nach einem der Ansprüche 1 bis 9,
wobei die Vorrichtung (1) derart zwischen dem kontinuierlichen System (44) und dem diskreten System (45) angeordnet ist, dass
- die Vorrichtung (1) ein biegeschlaffes Element (48) von dem kontinuierlichen System aufnimmt (44) und auf dem diskreten System (45) ablegt, oder
- die Vorrichtung (1) ein biegeschlaffes Element (48) von dem diskreten System (45) aufnimmt und auf dem kontinuierlichen System (44) ablegt.

11. Verfahren (50) zum Transportieren von biegeschlaffen Elementen (48), insbesondere für die Herstellung einer Batterie- und/oder Brennstoffzelle, umfassend die folgenden Schritte:
- Bereitstellen einer Vorrichtung (1) zum Transportieren von biegeschlaffen Elementen (48), insbesondere nach einem der Ansprüche 1 bis 9, wobei die Vorrichtung (1) eine Transporteinrichtung (2) und eine Antriebseinheit (4) aufweist,
- Aufnehmen, durch die Transporteinrichtung (2) der Vorrichtung (1), von einem biegeschlaffen Element (48) in einem ersten Bereich (A),
- Transportieren, mittels der Transporteinrichtung (2) der Vorrichtung (1), des biegeschlaffen Elements (48) von dem ersten Bereich (A) in einen zweiten Bereich (B), und
- Ablegen, durch die Transporteinrichtung (2) der Vorrichtung (1), des biegeschlaffen Elements (48) in dem zweiten Bereich (B), und
- Bewegen, durch die Antriebseinheit (4) der Vorrichtung (1), der Transporteinrichtung (2) von dem zweiten Bereich (B) in den ersten Bereich (A).

12. Verfahren (50) nach Anspruch 11, wobei die Antriebseinheit (4) die Transporteinrichtung (2) in dem ersten Bereich (A) mit einem ersten Geschwindigkeitsprofil bewegt, zwischen dem ersten Bereich (A) und dem zweiten Bereich (B) mit einem zweiten Geschwindigkeitsprofil bewegt, in dem zweiten Bereich (B) mit einem dritten Geschwindigkeitsprofil bewegt und zwischen dem zweiten Bereich (B) und dem ersten Bereich (A) mit einem vierten Geschwindigkeitsprofil bewegt.

13. Verfahren (50) nach Anspruch 12, wobei
- das erste Geschwindigkeitsprofil, das zweite Geschwindigkeitsprofil, das dritte Geschwindigkeitsprofil und das vierte Geschwindigkeitsprofil voneinander verschieden oder zumindest teilweise gleich sind, und/oder
- zumindest eines von dem ersten Geschwindigkeitsprofil, dem zweiten Geschwindigkeitsprofil, dem dritten Geschwindigkeitsprofil und dem vierten Geschwindigkeitsprofil eine Geschwindigkeit umfasst, die im Wesentlichen Null ist.

14. Verfahren (50) nach einem der Ansprüche 11 bis 13, wobei
der erste Bereich (A) als ein Abschnitt eines kontinuierlichen Systems (44) ausgebildet ist und der zweite Bereich (B) als ein Abschnitt eines diskreten Systems (45) ausgebildet ist, oder
der erste Bereich (A) als ein Abschnitt eines diskreten Systems (45) ausgebildet ist und der zweite Bereich (B) als ein Abschnitt eines kontinuierlichen Systems (44) ausgebildet ist.

15. Verfahren (50) nach Anspruch 14, wobei
wenn der erste Bereich (A) als der Abschnitt des kontinuierlichen Systems (44) ausgebildet ist und der zweite Bereich (B) als der Abschnitt des diskreten Systems (45) ausgebildet ist, das erste Geschwindigkeitsprofil eine Geschwindigkeit umfasst, die im Wesentlichen einer Geschwindigkeit des kontinuierlichen Systems (44) entspricht und das dritte Geschwindigkeitsprofil eine Geschwindigkeit umfasst, die im Wesentlichen Null ist, oder
wenn der erste Bereich (A) als der Abschnitt des diskreten Systems (45) ausgebildet ist und der zweite Bereich (B) als der Abschnitt des kontinuierlichen Systems (44) ausgebildet ist, das erste Geschwindigkeitsprofil eine Geschwindigkeit umfasst, die im Wesentlichen Null ist und das dritte Geschwindigkeitsprofil eine Geschwindigkeit umfasst, die im Wesentlichen einer Geschwindigkeit des kontinuierlichen Systems (44) entspricht.
